# EUROPEAN PATENT SPECIFICATION

(11) **EP 2 464 988 B1**
(45) Date of publication and mention of the grant of the patent: **19.04.2017**
(21) Application number: 10747751.5
(22) Date of filing: 14.08.2010
(51) Int. Cl.: G01S 19/03, G01S 5/10, G01S 5/02, G01S 19/25, G01S 5/00

(54) **ASSISTANCE DATA FOR POSITIONING IN MULTIPLE RADIO ACCESS TECHNOLOGIES**
HILFSDATEN ZUR POSITIONIERUNG BEI MERFACHFUNKZUGANGSTECHNOLOGIEN
DONNÉES D'AIDE POUR LE POSITIONNEMENT DANS DES TECHNOLOGIES D'ACCÈS RADIO MULTIPLES

(30) Priority: 14.08.2009 US 234196 P; 13.08.2010 US 856454
(43) Date of publication of application: 20.06.2012
(73) Proprietor: Qualcomm Incorporated, San Diego, CA 92121 (US)
(72) Inventor: ROWITCH, Douglas, Neal, San Diego California 92121 (US); EDGE, Stephen, W., San Diego California 92121 (US); TENNY, Nathan, E., San Diego California 92121 (US)
(74) Representative: Carstens, Dirk Wilhelm
(86) International application number: PCT/US2010/045554
(87) International publication number: WO 2011/020083

(56) References cited:
- US-A1- 2003 040 323
- US-A1- 2005 037 775
- US-A1- 2008 228 654

## Description

### Cross-reference to related applications

This application claims benefit and priority under 35 U.S.C. §119(e) to U.S. Provisional Application No. 61/234,196, filed August 14, 2009, titled "TRANSMISSION OF ASSISTANCE DATA FOR USER EQUIPMENT BASED POSITIONING IN MULTIPLE RADIO ACCESS TECHNOLOGIES".

### BACKGROUND

### I. Field of the Invention

The invention relates to position determination systems, and more particularly to hybrid positioning using wireless communication signals. II. Background

To perform position location of a mobile station that is accessing one or more wireless cellular networks (e.g., a cellular telephone network), several approaches perform trilateration based upon the use of timing information sent between each of several base stations and a mobile station, such as a cellular telephone. One approach, called Advanced Forward Link Trilateration (AFLT) in CDMA or Enhanced Observed Time Difference (E-OTD) in GSM or Observed Time Difference of Arrival (OTDOA) in WCDMA, measures at the mobile station the relative times of arrival of signals transmitted from each of several base stations. These times can be transferred to a Location Server (e.g., a Position Determination Entity (PDE) in CDMA), which computes the position of the mobile station using these times of reception. The transmit times at these base stations are coordinated such that at a particular instance of time, the times-of-day associated with multiple base stations are within a specified error bound. The accurate positions of the base stations and the times of reception are used to determine the position of the mobile station.

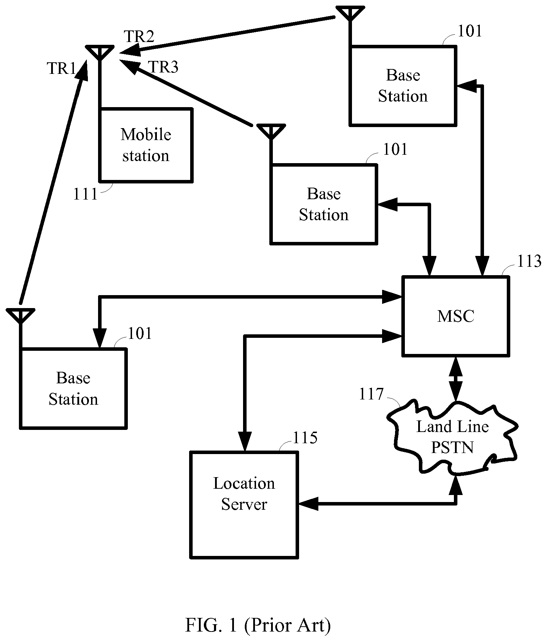

FIG. 1 shows an example of an AFLT system where the times of reception (TR1, TR2, and TR3) of signals from base stations 101 are measured at the mobile station 111. This timing data may then be used to compute the position of the mobile station 111. Such computation may be done at the mobile station 111 or at a location server 115 if the timing information so obtained by the mobile station 111 is transferred to the location server 115. Typically, the times of receptions are communicated to a location server 115 through one of the base stations 101. The location server 115 is coupled to receive data from the base stations 101 through one or more mobile switching center (MSC 113). The location server 115 may include a base station almanac (BSA) server, which provides the location of the base stations 101 and/or the coverage area of the base stations 101 and/or any small differences in signal transmission times between any pair of the base stations 101. Alternatively, the location server 115 and the BSA server may be separate from each other; and the location server 115 communicates with the base station 101 to obtain the base station almanac for position determination. The MSC 113 provides signals (e.g., voice communications) to and from the land-line Public Switched Telephone Network (PSTN 117) so that signals may be conveyed to and from the mobile station 111 to other telephones (e.g., land-line phones on the PSTN 117 or other mobile stations 111). In some cases, the location server 115 may also communicate with the MSC 113 via a cellular link. The location server 115 may also monitor emissions from several of the base stations 101 either directly or using external measurement units in an effort to determine the relative timing of these emissions.

In another approach, called Uplink Time of Arrival (UTOA), the times of reception of a signal from a mobile station 111 are measured at several base stations 101. FIG. 1 applies to this case if the arrows of TR1, TR2, and TR3 are reversed. This timing data may then be communicated to the location server 115 to compute the position of the mobile station 111.

Yet a third method of doing position location involves the use in the mobile station 111 of circuitry for the United States Global Positioning Satellite (GPS) system or other Satellite Positioning Systems (SPS), such as the Russian GLONASS system and the proposed European Galileo System or a combination of satellites and pseudolites. Pseudolites are ground-based transmitters, which broadcast a PN code (similar to a GPS signal) modulated on an L-band carrier signal, generally synchronized with SPS time. Each transmitter may be assigned a unique PN code so as to permit identification by a mobile station 111. Pseudolites are useful in situations where SPS signals from an orbiting satellite might be unavailable, such as tunnels, mines, buildings or other enclosed areas. The term "satellite", as used herein, is intended to include pseudolites or equivalents of pseudolites. The term GPS signals, as used herein, is intended to include SPS signals, and SPS-like signals from pseudolites or equivalents of pseudolites. Similarly, the terms GPS satellite and GPS receiver, as used herein, are intended to include other SPS satellites and SPS receivers. Methods that use an SPS receiver to determine a position of a mobile station 111 may be completely autonomous (in which the SPS receiver, without any assistance, determines the position of the mobile station 111) or may utilize the wireless network to provide assistance data or to share in the position calculation. Examples of such methods are described in U.S. Pat. Nos. 6,208,290; 5,841,396; 5,874,914; 5,945,944; and 5,812,087. For instance, these patents describe, among other things: a method to obtain from cellular phone transmission signals accurate time information, which is used in combination with SPS signals to determine the position of the receiver; a method to transmit the Doppler frequency shifts of in-view satellites to the receiver on the mobile station 111 to determine the position of the mobile station 111; a method to transmit satellite almanac data (or ephemeris data) to a receiver to help the receiver to determine its position; a method to lock to a precision carrier frequency signal of a cellular telephone system to provide a reference signal at the receiver for SPS signal acquisition; a method to use an approximate location of a receiver to determine an approximate Doppler for reducing SPS signal processing time; and a method to compare different records of a satellite data message received to determine a time at which one of the records is received at a receiver in order to determine the position of the receiver. In practical low-cost implementations, both the mobile cellular communications receiver and the SPS receiver are integrated into the same enclosure and may in fact share common electronic circuitry.

In yet another variation of the above methods, the round trip delay (RTD) is found (e.g., by the base station 101) for signals that are sent from the base station 101 to the mobile station 111 and then are returned. In a similar, but alternative, method the round trip delay is found (e.g., by a mobile station 111) for signals that are sent from the mobile station 111 to the base station 101 and then returned. Each of these round-trip delays is divided by two to determine an estimate of the one-way propagation delay. Knowledge of the location of the base station 101, plus a one-way delay constrains the location of the mobile station 111 to a circle on the earth. Two such measurements from distinct base stations 101 then result in the intersection of two circles, which in turn constrains the location to two points on the earth. A third measurement (even an angle of arrival or cell sector identification) resolves the ambiguity.

A combination of either the AFLT or U-TDOA with an SPS system may be referred to as a "hybrid" system. For example, U.S. Pat. No. 5,999,124 describes, among other things, a hybrid system, in which the position of a cell based transceiver is determined from a combination of at least: i) a time measurement that represents a time of travel of a message in the cell based communication signals between the cell based transceiver and a communication system; and ii) a time measurement that represents a time of travel of an SPS signal.

Altitude aiding has been used in various methods for determining the position of a mobile station 111. Altitude aiding is typically based on a pseudo-measurement of the altitude. The knowledge of the altitude of a location of a mobile station 111 constrains the possible positions of the mobile station 111 to a surface of a sphere (or an ellipsoid) with its center located at the center of the earth. This knowledge may be used to reduce the number of independent measurements required to determine the position of the mobile station 111. For example, U.S. Pat. No. 6,061,018 describes, among other things, a method where an estimated altitude is determined from the information of a cell object, which may be a cell site that has a cell site transmitter in communication with the mobile station 111.
Attention is drawn to document US2008228654 (A1). It describes techniques for supporting network independent location services (LCS). In one deign, a location center may communicate with a terminal to establish an account for the terminal with the location center for location services. The location center may establish the account for the terminal independent of a home network or a serving network for the terminal. During signup to establish the account, the location center may (i) provide address information for the location center, security information, and/or other information for the location center and (ii) receive public identity information and/or other information for the terminal. The location center may thereafter provide location services to the terminal based on the established account and without interacting with the home or serving network for the terminal. Techniques for supporting delivery of assistance data are also described.
Attention is also drawn to the document US 2003/0040323 A1, which describes that an E-OTD method for locating a mobile station using measurement information related to arrival of signals transmitted from base stations of different operators for obtaining the base station locations. When one operator does not have enough base stations for providing measurement information for location calculation, the SMLC of that operator acquires measurement information of base stations from at least one other operator using SMLC-SLMC communication protocol.

### BRIEF SUMMARY

In accordance with the present invention a method and mobile station for determining an estimated position, as set forth in claims 1 and 4, are provided. Embodiments of the invention are claimed in the dependent claims.

Disclosed is an apparatus and method for determining a position of a mobile station. According to some examples, disclosed is a method of determining an estimated position of a mobile station, the method comprising: receiving assistance data from a first wireless network, wherein the assistance data comprises terrestrial assistance data for the first wireless network, and wherein the terrestrial assistance data comprises assistance data for a plurality of base stations in the first wireless network; obtaining, while unattached to the first wireless network, location information from the first wireless network based on the terrestrial assistance data for the first wireless network; and determining the estimated position of the mobile station based on the location information.

According to some examples, disclosed is a mobile station for determining an estimated position of the mobile station, the device comprising: a receiver, wherein the receiver receives assistance data from a first wireless network, wherein the assistance data comprises terrestrial assistance data for the first wireless network, and wherein the terrestrial assistance data comprises assistance data for a plurality of base stations in the first wireless network; and a processor and memory comprising instructions to obtain, while unattached to the first wireless network, location information from the first wireless network based on the terrestrial assistance data for the first wireless network; and instructions to determine the estimated position of the mobile station based on the location information.

According to some examples, disclosed is a mobile station for determining an estimated position of the mobile station, the mobile station comprising: means for receiving assistance data from a first wireless network, wherein the assistance data comprises terrestrial assistance data for the first wireless network, and wherein the terrestrial assistance data comprises assistance data for a plurality of base stations in the first wireless network; means for obtaining, while unattached to the first wireless network, location information from the first wireless network based on the terrestrial assistance data for the first wireless network; and means for determining the estimated position of the mobile station based on the location information.

According to some examples, disclosed is a mobile station comprising a processor and memory, wherein the memory includes instructions to: receive assistance data from a first wireless network, wherein the assistance data comprises terrestrial assistance data for the first wireless network, and wherein the terrestrial assistance data comprises assistance data for a plurality of base stations in the first wireless network; obtain, while unattached to the first wireless network, location information from the first wireless network based on the terrestrial assistance data for the first wireless network; and determine an estimated position of the mobile station based on the location information.

According to some examples, disclosed is a computer-readable storage medium including program code stored thereon for use by a mobile station, comprising: program code to receive assistance data from a first wireless network, wherein the assistance data comprises terrestrial assistance data for the first wireless network, and wherein the terrestrial assistance data comprises assistance data for a plurality of base stations in the first wireless network; program code to obtain, while unattached to the first wireless network, location information from the first wireless network based on the terrestrial assistance data for the first wireless network; and program code to determine an estimated position of the mobile station based on the location information.

It is understood that other aspects will become readily apparent to those skilled in the art from the following detailed description, wherein it is shown and described various aspects by way of illustration. The drawings and detailed description are to be regarded as illustrative in nature and not as restrictive.

### Brief description of the drawing

Embodiments of the invention will be described, by way of example only, with reference to the drawings.
FIG. 1 shows an example of a cellular network, which determines the position of a mobile cellular device.
FIG. 2 shows an example of a server, which may be used with the present invention.
FIG. 3 shows a block diagram representation of a mobile station according to one embodiment of the present invention.
FIG. 4 shows one example of a hybrid positioning system.
FIG. 5 shows another example of a hybrid positioning system.
FIG. 6 illustrates a flow between a mobile station and a first wireless network, in accordance with some embodiments of the present invention.
FIG. 7 shows an example of terrestrial assistance data, in accordance with some embodiments of the present invention.
FIGS. 8-10 illustrate flows between a mobile station and first and second wireless networks, in accordance with some embodiments of the present invention.
FIG. 11 shows a method that continues to use assistance data after an inter-RAT reselection, in accordance with some embodiments of the present invention.

### DETAILED DESCRIPTION

The detailed description set forth below in connection with the appended drawings is intended as a description of various aspects of the present disclosure and is not intended to represent the only aspects in which the present disclosure may be practiced. Each aspect described in this disclosure is provided merely as an example or illustration of the present disclosure, and should not necessarily be construed as preferred or advantageous over other aspects. The detailed description includes specific details for the purpose of providing a thorough understanding of the present disclosure. However, it will be apparent to those skilled in the art that the present disclosure may be practiced without these specific details. In some instances, well-known structures and devices are shown in block diagram form in order to avoid obscuring the concepts of the present disclosure. Acronyms and other descriptive terminology may be used merely for convenience and clarity and are not intended to limit the scope of the disclosure.

Position determination techniques to determine an estimated position described herein may be implemented in conjunction with various wireless communication networks such as a wireless wide area network (WWAN), a wireless local area network (WLAN), a wireless personal area network (WPAN), and so on. The terms "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, Long Term Evolution (LTE) network, a WiMAX (IEEE 802.16) network, and so on.

A CDMA network may implement one or more radio access technologies (RATs) such as cdma2000, Wideband-CDMA (W-CDMA), and so on. Cdma2000 includes IS-95, IS-2000 and IS-856 standards. A TDMA network may be implemented with a Global System for Mobile Communications (GSM) system, Digital Advanced Mobile Phone System (D-AMPS), or some other radio access technology (RAT). GSM, W-CDMA and LTE standards are described in documents from a consortium named "3^{rd} Generation Partnership Project" (3GPP). The cdma2000 standard is described in documents from a consortium named "3^{rd} Generation Partnership Project 2" (3GPP2). 3GPP and 3GPP2 documents are publicly available. WLAN may be implemented with an IEEE 802.11x standards. WPAN may be implemented with a Bluetooth, an IEEE 802.15x, or other standard. The techniques may also be implemented in conjunction with any combination of WWAN, WLAN and/or WPAN.

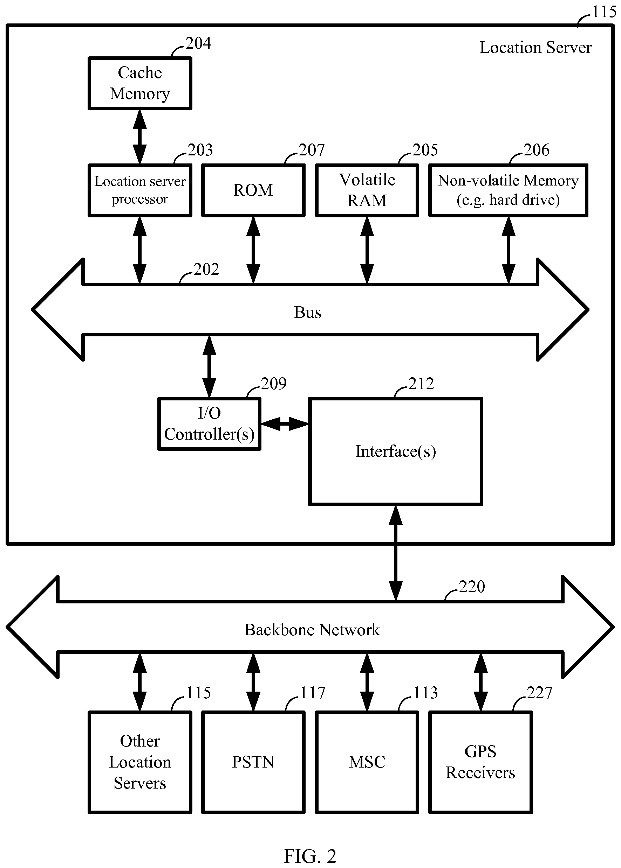

A satellite positioning system (SPS) typically includes a system of transmitters positioned to enable entities to determine their location on or above the Earth and are based, at least in part, on signals received from the transmitters. Such a transmitter typically transmits a signal marked with a repeating pseudo-random noise (PN) code of a set number of chips and may be located on ground based control stations, user equipment and/or space vehicles. In a particular example, such transmitters may be located on Earth orbiting satellite vehicles (SVs). For example, a SV in a constellation of a Global Navigation Satellite System (GNSS) such as Global Positioning System (GPS), Galileo, GLONASS or Compass may transmit a signal marked with a PN code that is distinguishable from PN codes transmitted by other SVs in the constellation (e.g., using a PN code with different phases, using different PN codes for each satellite as in GPS, or using the same code on different frequencies as in GLONASS). In accordance with certain aspects, the techniques presented herein are not restricted to global systems (e.g., GNSS) for SPS. For example, the techniques provided herein may be applied to or otherwise enabled for use in various regional systems (e.g., Quasi-Zenith Satellite System (QZSS) over Japan, Indian Regional Navigational Satellite System (IRNSS) over India, Beidou over China, etc.) and/or various augmentation systems (e.g., an Satellite Based Augmentation System (SBAS)) that may be associated with or otherwise enabled for use with one or more global and/or regional navigation satellite systems. By way of example but not limitation, an SBAS system may include one or more augmentation systems that provide integrity information, differential corrections, etc. (e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like). Thus, as used herein SPS or GPS may include any combination of one or more global and/or regional navigation satellite systems and/or augmentation systems, and SPS signals may include SPS, SPS-like, and/or other signals associated with such one or more SPS.
As used herein, a mobile station 111 (MS), refers to a device such as a mobile device, a cellular phone or other wireless communication device, personal communication system (PCS) device, personal navigation device (PND), Personal Information Manager (PIM), Personal Digital Assistant (PDA), laptop, tablet, smartbook, netbook, or other suitable device that is capable of receiving wireless communication and/or navigation signals. The term mobile station 111 is also intended to include devices that communicate with a personal navigation device (PND), such as by short-range wireless, infrared, wireline connection, or other connection, regardless of whether satellite signal reception, assistance data reception and/or position-related processing occurs at the mobile station 111 or remotely. Also, a mobile station 111 includes all devices, including wireless communication devices, computers, laptops, etc. that are capable of communication with a server via the Internet, Wi-Fi, or other network, and regardless of whether satellite signal reception, assistance data reception, and/or position-related processing occurs at the mobile station 111, at a server, or at another device associated with the network. Any operable combination of the above are also considered a mobile station. A mobile station may also be referred to as a user equipment (UE). FIG. 1 described above and FIGS. 2-5 described below are also described in U.S. Application No. 10/877,205 (Publication Number 20050037775) filed June 25, 2004, titled "Method and apparatus for wireless network hybrid positioning". FIG. 2 shows an example of a data processing system, which includes a location server 115. For example, as described in U.S. Pat. No. 5,841,396, the location server 115 may provide assistance data such as Doppler or other satellite assistance data to a mobile station 111. An entity, such as the location server 115, the mobile station 111 or a different server, performs the final position calculation (after receiving measurements such as pseudoranges and/or other data from which pseudoranges can be determined from the mobile station 111). The entity then may forward this final position calculation to the base station 101 or to some other system. The location server 115 typically includes one or more interface(s) 212, such as one or more modems and/or one or more network interfaces, to various communication devices. The location server 115 may be coupled to a backbone network 220 through the interface(s) 212. Such a backbone network 220 may include connections to one or more other devices such as another location server 115, a PSTN 117, an MSC 113, one or more GPS receivers 227, an intranet, a base station 101, and other entities.

Multiple base stations 101 are typically arranged to cover a geographical area with radio coverage. Some of these multiple base stations 101 are coupled to at least one MSC 113. Thus, the multiple base stations 101 are geographically distributed but coupled together by an MSC 113. The backbone network 220 may be connected to a network of one or more GPS receivers 227, which provide differential GPS information and may also provide GPS ephemeris data for use in calculating the position of mobile stations 111. The backbone network 220 is coupled through the interface(s) 212 to the location server processor 203. The backbone network 220 may be connected to other computers or network components as well. Also, the backbone network 220 may be connected to computer systems operated by emergency operators, such as the Public Safety Answering Points, which respond to 911 telephone calls. Various examples of methods for using a location server 115 have been described in numerous U.S. patents, including: U.S. Pat. Nos.: 5,841,396; 5,874,914; 5,812,087; and 6,215,442.

The location server 115 includes a bus 202, which is coupled to a location server processor 203 (e.g., a microprocessor), random access memory (volatile RAM 205), a non-volatile memory 206 and a read only memory (ROM 207). The location server processor 203 is coupled to cache memory 204. The bus 202 interconnects these various components together. While FIG. 2 shows the non-volatile memory 206 is a local device coupled directly to the rest of the components in the location server 115, the non-volatile memory 206 may be remote from the location server 115 or the bus 202, such as with a network storage device coupled to the location server 115 through the interface(s) 212, such as a modem or Ethernet interface. The bus 202 may include one or more buses connected to each other through various bridges, controllers and/or adapters as is well known in the art. In many situations the location server 115 may perform its operations automatically without human assistance. In some designs where human interaction is required, the I/O controller(s) 209 may communicate with displays, keyboards and other I/O devices.

Note that while FIG. 2 illustrates various components of a data processing system, it is not intended to represent any particular architecture or manner of interconnecting the components as such details are not germane to the present invention. It will also be appreciated that network computers and other data processing systems that have fewer components or perhaps more components may also be used with the present invention and may act as a location server 115. In some embodiments, the methods of the present invention may be performed on computer systems that are simultaneously used for other functions, such as cellular switching, messaging services, etc. In these cases, some or all of the features of FIG. 2 would be shared for several functions.

It will be apparent from this description that aspects of the present invention may be embodied, at least in part, in software. That is, the techniques may be carried out in a computer system or other data processing system in response to the location server processor 203 executing sequences of instructions contained in memory, such as cache memory 204, volatile RAM 205, non-volatile memory 206, ROM 207 or a remote storage device. In various embodiments, hardware circuitry may be used in combination with software instructions to implement the present invention. Thus, the techniques are not limited to any specific combination of hardware circuitry and software or to any particular source for the instructions executed by the location server processor 203. In addition, throughout this description, various functions and operations are described as being performed by or caused by software code to simplify description. However, those skilled in the art will recognize what is meant by such expressions is that the functions result from execution of the code by a processing unit, such as the location server processor 203.

A machine-readable medium can be used to store software and data, which when executed by a location server processor 203, causes the data processing systems to perform various methods of the present invention. This executable software and data may be stored in various places including for example cache memory 204, volatile RAM 205, non-volatile memory 206 and/or ROM 207. Portions of this software and/or data may be stored in any one of these storage devices. Thus, a machine-readable storage medium includes any mechanism that provides (i.e., stores or holds) information in a form accessible by a mobile station 111 with a set of one or more processors. For example, a machine-readable medium may include recordable/non-recordable media (e.g., volatile RAM 205, ROM 207, magnetic disk storage media, optical storage media, flash memory devices, etc.).

FIG. 1 and FIG. 2 are both illustrative and not restrictive. For example, in a network supporting LTE, a location server 115 may be attached to one or more Mobility Management Entities (MMEs) instead of to an MSC 113 and each MME may be attached to one or more LTE base stations 101 known as eNode Bs. In a network supporting, WCDMA, a location server 115 may be attached to a Radio Network Control (RNC) instead of to an MSC 113 or MME and the RNC may be connected to WCDMA base stations 101 known as Node Bs. Other distinctive types of architecture for supporting a location server 115 are also possible in other types of network (e.g., for cdma2000 1x, cdma2000 HRPD, etc.). These differing types of architecture may in turn affect connections on the backbone network 220 and supported interface(s) 212 of the location server 115 as illustrated in FIG. 2.

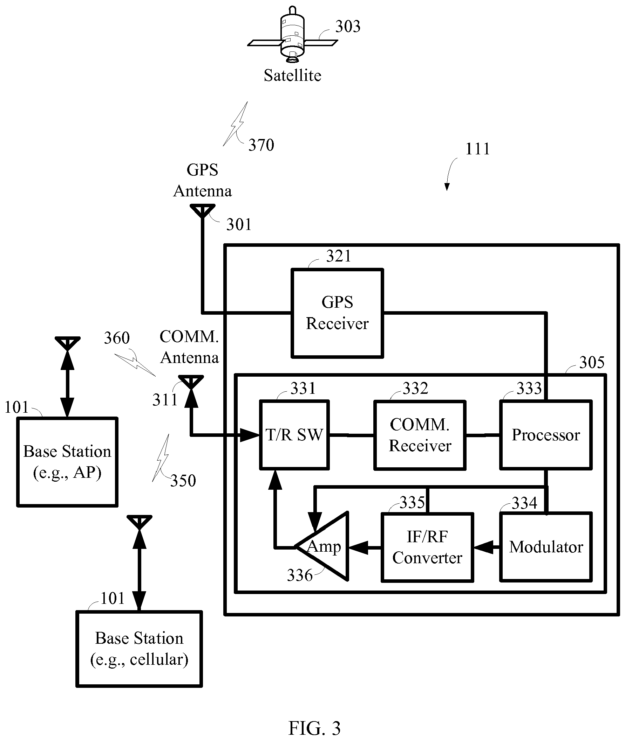

FIG. 3 shows a block diagram representation of a mobile station 111 according to one embodiment of the present invention. The mobile station 111 combines a communication transceiver 305 with a GPS receiver 321. The communication transceiver 305 processes base station signals from base stations 101. The GPS receiver 321 processes GPS signals, which are generated from GPS satellites 303. Some base stations 101, such as a cellular base station, provide cellular base station signals over a cellular base station communication link 350. Other base stations 101, such as, e.g., a wireless LAN access point (AP), a femtocell, etc., provide access point base station signals over an access point communication link 360. A communication antenna 311 is used for receiving signals from different types of base stations 101 (e.g., cellular base stations and wireless LAN access points). The communication transceiver 305 may use a separate and distinct antennas for receiving signals of different air interfaces. Further, the communication transceiver 305 may use separate and distinct components for at least partial processing of the received wireless signals and may or may not share some components in the processing of the wireless signals of different air interfaces. For example, the communication transceiver 305 may have separate circuits for the RF signal processing and share same data processor resources. From this description, various combinations and variations of the combined receiver will be apparent to one skilled in the art.

The mobile station 111 combines a GPS receiver 321 and a communication transceiver 305. The communication transceiver 305 may be implemented as multiple receivers and transmitters for different wireless networks. For example, the communication transceiver 305 may include a transceiver portion for receiving and/or transmitting cellular telephone signals and another transceiver portion for receiving and/or transmitting Wi-Fi signals. The communication transceiver 305 is coupled to communication antenna 311. The GPS receiver 321 includes a GPS acquisition and tracking circuit, which is coupled to a GPS antenna 301. GPS signals (e.g., from a satellite communication link 370 transmitted from GPS satellites 303) are received through GPS antenna 301 and input to the GPS receiver 321, which acquires the PN (pseudorandom noise) codes for various GPS satellites 303. The data produced by the GPS receiver 321 (e.g., correlation indicators) are processed by mobile station processor 333 for transmittal (e.g., of GPS pseudoranges) by the communication transceiver 305. The communication transceiver 305 contains a transmit/receive switch 331 which routes communication signals (typically RF) to and from communication antenna 311 and the communication transceiver 305. In some systems, a band splitting filter or "duplexer," is used instead of the T/R switch. Received communication signals are input to communication receiver 332 and passed to mobile station processor 333 for processing. The communication receiver 332 and the communication transceiver 305 each acts as a means for receiving communication signals, such as assistance data, from a wireless network. Communication signals to be transmitted from mobile station processor 333 are propagated to modulator 334 and a frequency converter (IF/RF converter 335). Power amplifier 336 increases the gain of the signal to an appropriate level for transmission to the base station 101 (e.g., a cellular base station or a wireless LAN access point).

In one embodiment of the present invention, the communication transceiver 305 is capable of being used with a number of different air interfaces (e.g., IEEE 802.11, Bluetooth, UWB, TD-SCDMA, iDEN, HDR, TDMA, GSM, CDMA, W-CDMA, UMTS, LTE, WiMAX, or other similar networks) for communication (e.g., through a cellular base station communication link 350 or an access point communication link 360). In one embodiment of the present invention, the communication transceiver 305 is capable of being used with one air interface for communication and capable of being used to receive signals with other air interfaces. In one embodiment of the present invention, the communication transceiver 305 is capable of being used with one air interface for communication while also being capable of being used with signals in another air interface to extract timing indicators (e.g., timing frames or system time) or to calibrate a local oscillator of the mobile station 111. For more details about a mobile station 111 extracting timing indicators or calibrating the local oscillator may be found in U.S. Pat. Nos. 5,874,914 and 5,945,944.

In one embodiment of the mobile station 111, location data generated by the GPS receiver 321 is transmitted to a server over a cellular base station communication link 350 or over an access point communication link 360. A location server 115 then determines the location of the mobile station 111 based on the location data from the mobile station 111, the time at which the location data were measured and ephemeris data received from the GPS receiver 321 or other sources of such data. The location data can then be transmitted back to a communication receiver 332 in the mobile station 111 or to other remote locations. More details about portable receivers utilizing a cellular base station communication link 350 can be found in U.S. Pat. No. 5,874,914.

In one embodiment of the present invention, the mobile station 111 includes (or is coupled to) a data processing system (e.g., a personal data assistant or a portable computer). The data processing system includes a bus that is coupled to a microprocessor and a memory (e.g., ROM, volatile RAM and/or non-volatile memory). The bus interconnects various components together and also interconnects these components to a display controller and display device and to peripheral devices such as input/output (I/O) devices, which are well known in the art. The bus may include one or more buses connected to each other through various bridges, controllers and/or adapters as are well known in the art. In one embodiment, the data processing system includes communication ports (e.g., a USB (Universal Serial Bus) port, a port for IEEE-1394 bus connection). In one embodiment of the present invention, the mobile station 111 stores the locations and identifications (e.g., MAC address) of wireless access points (e.g., according to the types of the wireless access points) for extracting and enhancing the location information about the wireless access points using the memory and software program instructions stored in the memory. In one embodiment, the mobile station 111 only stores the locations of the mobile station 111 and identifications of the wireless access points for transmission to a server (e.g., through a communication port or a wireless communication link) when a communication connection is established.

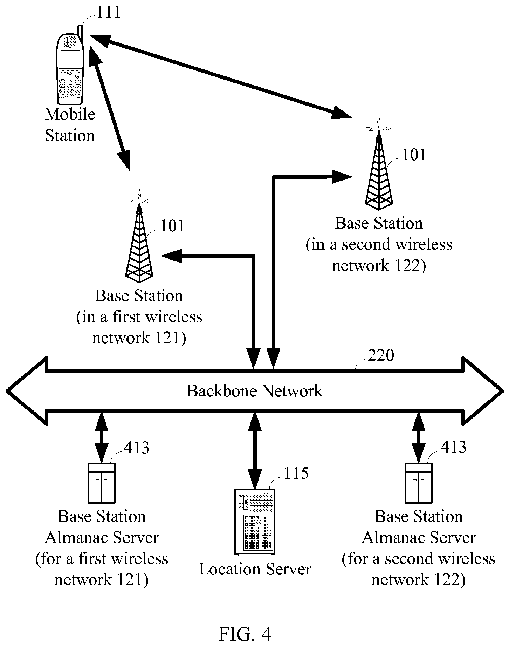

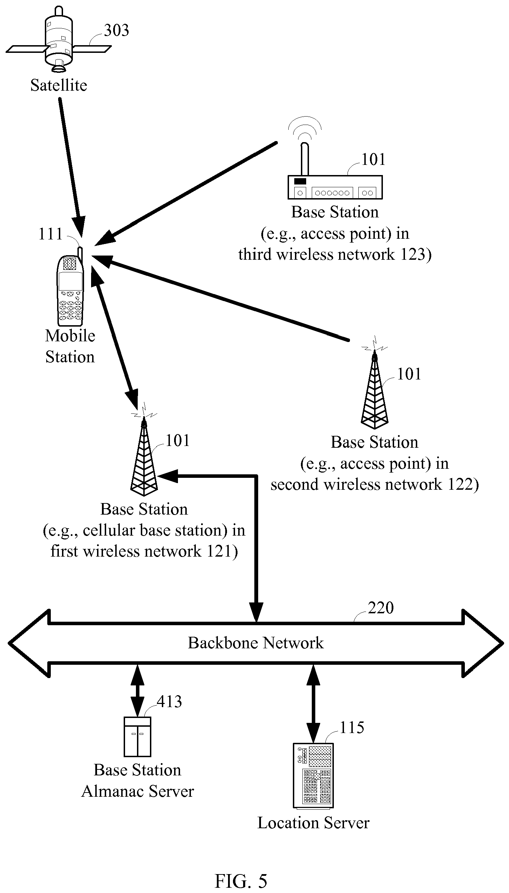

FIG. 4 shows one example of a hybrid positioning system. For position determination, a mobile station 111 receives signals from a base station 101 (e.g., a cellular base station) of a first wireless network 121 and/or a base station 101 (e.g., a cellular base station) of a second wireless network 122 and/or a base station 101 (e.g., an access point) of a third wireless network 123 (FIG. 5). The mobile station 111 includes a GPS receiver 321 for receiving GPS signals from GPS satellites 303. Also, the mobile station 111, in determining timing measurements, may make base station timing measurements (e.g., pseudorange, round trip time, times of arrival of signals and/or time differences of arrival of signals), which are based on the GPS signals and/or the wireless signals from one or more of the first, second and third wireless networks 121, 122, 123.

The timing measurements may be used to determine the position of the mobile station 111. It is understood that, in general, each wireless network 121, 122 and 123 may include a number of base stations 101 (e.g., cellular base stations or wireless access points) and may operate with different specification. For example, the first wireless network 121 and the second wireless network 122 may use the same type of air interface but operated by different service providers. The first wireless network 121 and the second wireless network 122 may operate with the same communication protocols but at different frequencies. The first wireless network 121 and the second wireless network 122 may be from different service providers using different types of air interfaces (e.g., TDMA, GSM, CDMA, W-CDMA, UMTS, LTE, WiMAX, TD-SCDMA, iDEN, HDR, Bluetooth, UWB, IEEE 802.11 or other similar networks). Alternatively, the first wireless network 121 and the second wireless network 122 may be operated by the same service provider but use different types of air interfaces.

The mobile station 111 communicates information extracted from the GPS signals from the GPS satellites 303 and information extracted from the base stations 101. The information from the GPS signals may include pseudorange measurements and/or a record of a GPS message for comparison to determine a time of signal reception. The information from the base stations 101 may include identification, received signal strength and/or round-trip or one-way time measurements for at least one of the base stations 101. In some embodiments, this information is communicated to the location server 115 through one of the wireless networks, such as the first wireless network 121 or the second wireless network 122. For example, the information is communicated to the location server 115 when the mobile station 111 is attached or is a subscriber of the second wireless network 122 but not a subscriber of a first wireless network 121.

The location server 115 may be combined as a single location server 115 for multiple wireless networks. Alternatively, the location server 115 may be separated such that one location server 115 exists for each wireless network. For example, a first base station almanac server 413 maintains the almanac data for the first wireless network 121 and a second base station almanac server 413 maintain the almanac data for the second wireless network 122. Alternatively, a base station almanac server 413 may maintain the almanac data for both the first wireless network 121 and the second wireless network 122. This almanac data may simply be, in one exemplary implementation, a database listing a latitude and longitude for each base station 101, which is specified by identification information.

The location server 115 may use the information communicated from the mobile station 111 and the data in the almanac from one or both networks to determine the position of the mobile station 111. The location server 115 may determine the location of the mobile station 111 in a number of different ways. For example, the location server 115 may retrieve the locations of base stations 101 from the first base station almanac server 413 for the first wireless network 121 and/or the second base station almanac server 413 for the second wireless network 122. The location server 115 may use the retrieved locations, the range measurements (which indicate a distance between the mobile station 111 and base stations 101), the GPS pseudorange measurements, and the GPS ephemeris information, to calculate a position of the mobile station 111. U.S. Pat. No. 5,999,124 provides a discussion of how range measurements from a single wireless network and GPS pseudorange measurements may be combined to calculate an estimated position of a mobile station 111. Alternatively, the location server 115 may use only terrestrial range measurements (or other types of measurements such as signal strength measurements) to multiple wireless access points of multiple wireless networks to calculate the estimated position if many (e.g., more than 3) of such range measurements can be made; in this case, there is no need to obtain GPS pseudoranges or GPS ephemeris information. If GPS pseudoranges to GPS satellites 303 are available, these pseudoranges can be combined with GPS ephemeris information, obtained either by the mobile station 111 or by a collection of GPS reference receivers, as described in U.S. Pat. No. 6,185,427, to provide additional information in the estimated position calculations.

A backbone network 220 may include local area networks, one or more intranets and the Internet for the information exchange between the various entities. It is understood that the location server 115, the first base station almanac server 413 (for the first wireless network 121) and the second base station almanac server 413 (for the second wireless network 122) may be implemented as a single server program or different server programs in a single data processing system or in separate data processing systems (e.g., maintained and operated by different service providers). Different service providers may operate the first wireless network 121 and the second wireless network 122, which are used by the mobile station 111 for estimated position determination. A mobile station 111 may be a subscriber only to one of the wireless networks, and thus the mobile station 111 may be authorized to use (and to have access to) only one wireless network. However, it may be possible to receive signals from the wireless network that is not subscribed to and thus it is possible to make range measurements or signal strength measurements relative to wireless access points in the wireless network that is not subscribed to.

One specific example of this situation involves a mobile station 111 that includes a tri-mode CDMA cellular phone, which can receive PCS frequency band signals from two service providers. For example, the mobile station 111 has the capability to receive and process signals from a first wireless network 121, operated by a first service provider, and from a second wireless network 122, operated by a second service provider but the user must subscribe with both service providers. If the user only subscribes to the first service provider but not the second service provider, the mobile station 111 for that user is authorized to operate with the first wireless network 121 but not with the second wireless network 122. If the mobile station 111 is in an environment in which only one base station 101 from the first wireless network 121 is available and capable of radio communication with the mobile station 111 but numerous base stations 101 from the second wireless network 122 are within radio communication range of the mobile station 111, the mobile station 111 may obtain satellite assistance data (if desired) from a location server 115 through the one base station 101 from the first wireless network 121. The mobile station 111 may transmit GPS pseudoranges, obtained at the mobile station 111, to the location server 115 through the one base station 101 from the first wireless network 121. However, it will not be possible to obtain more than one range measurement to another base station 101 unless range measurements to one or more base stations 101 from the second wireless network 122 are obtained. Thus, the mobile station 111 may obtain range measurements to available base stations 101 from the second wireless network 122, thereby providing multiple range measurements (e.g., distances between the mobile station 111 and two base stations 101 from the second wireless network 122), which can be used in the estimated position calculations.

The service providers may separately maintain the almanac information on a first base station almanac server 413 for a first wireless network 121 and a second base station almanac server 413 for a second wireless network 122. Although the mobile station 111 has communication access to only one of the wireless networks, the location server 115 may have access to both the first base station almanac server 413 and the second base station almanac server 413. After determining the identities of base stations 101 (e.g., wireless access points) of both the first wireless network 121 and the second wireless network 122, the mobile station 111 transmits the base station identification information to the location server 115, which uses first and second base station almanac servers 413 to retrieve the positions of the corresponding base stations 101, which can be used in determining the estimated position of the mobile station 111.

Alternatively, the cooperation between the service providers to share almanac data is not necessary. For example, the operator of the location server 115 maintains both a first base station almanac server 413 (for the first wireless network 121) and a second base station almanac server 413 (for the second wireless network 122). For example, an operator may maintain a base station almanac server 413 through a survey process to obtain the almanac data or through a data harvesting process using mobile stations 111 as further described in U.S. Application No. 10/877,205 (Publication Number 20050037775) filed June 25, 2004, titled "Method and apparatus for wireless network hybrid positioning".

The mobile station 111 may use both a first wireless network 121 and a second wireless network 122 for communicating with the location server 115 (instead of using only one of the wireless networks for communication purpose). As known in the art, various types of information can be exchanged between the mobile station 111 and the location server 115 for estimated position determination. For example, the location server 115 provides the mobile station 111 with Doppler frequency shift information for GPS satellites 303 in view by the mobile station 111 (e.g., through the first wireless network 121). Next, the mobile station 111 provides pseudorange measurements for GPS signals, the identification information of the base stations 101 and associated range measurements (e.g., round-trip time measurements) to the location server 115 through the second wireless network 122 for calculation of the estimated position of the mobile station 111.

The mobile station 111 may be capable of communicating through more than one wireless network to the location server 115 when in the coverage area of these wireless networks. However, the trade-off between cost and performance may dictate communication with the server using just one of the wireless networks, while using the wireless network(s) to obtain measurements (e.g., timing measurements or received signal levels) or other information (e.g., time information for time stamping measurements or calibration information for locking to an accurate carrier frequency or for calibrating a local oscillator of the mobile station 111).

The estimated position of the mobile station 111 may be determined at the location server 115 using the information communicated from the mobile station 111 and then transmitted back to the mobile station 111. Alternatively, the mobile station 111 may calculate the estimated position using assistance data from the location server 115 (e.g., Doppler frequency shifts for in-view GPS satellites 303, positions and coverage areas of base stations, differential GPS data and/or altitude aiding information).

FIG. 5 shows another example of a hybrid positioning system. A mobile station 111 may communicate with the location server 115 via a base station 101 (e.g., a cellular base station) of a first wireless network 121 and/or a base station 101 (e.g., a cellular base station) of a second wireless network 122 and/or a base station 101 (e.g., an access point) of a third wireless network 123. A method for determining the estimated position of the mobile station 111 may use GPS signals (e.g., from a satellite communication link 370 transmitted from GPS satellites 303), wireless signals from base stations 101 of the first wireless network 121 and wireless signals from base stations 101 of the second wireless network 122. The second wireless network 122 may be operated by a different service provider or use a different air interface than the first wireless network 121.

Typically, a wireless LAN access point (or other similar low power transmitters) has a small coverage area. When available, the small coverage area of such an access point provides a very good estimate of the position of the mobile station 111. Further, wireless LAN access points are typically located near or inside buildings, where the availability of other types of signals (e.g., GPS signals or wireless telephone signals) may be low. Thus, when such wireless transmissions are used with other types of signals, the performance of the positioning system can be greatly improved.

The wireless signals from different wireless networks may be used for position determination. For example, the wireless signals from the different wireless networks can be used to determine the identities of the corresponding access points, which are then used to determine the locations and coverage areas of the corresponding access points. When precision range information (e.g., round-trip time or signal-traveling time between an access point and the mobile station 111) is available, the range information and the location of the access point can be used in obtaining a hybrid positioning solution. When approximate range information (e.g., received signal level, which can be approximately correlated with an estimated range) is available, the location of the access point can be used to estimate the position of the mobile station 111 (or to determine the estimated altitude of the mobile station 111). Further, the mobile station 111 can use a precision carrier frequency from one of the base stations 101 (e.g., from an access point), which may not be the base station 101 used for the data communication purpose, to calibrate a local oscillator of the mobile station 111. More details about locking to a precision carrier frequency of a wireless signal to provide a reference signal at a GPS receiver 321 for signal acquisition can be found in U.S. Pat. No. 5,874,914. More details about using the accurate time information (e.g., timing markers or system time) for time stamping can be found in U.S. Pat. No. 5,945,944.

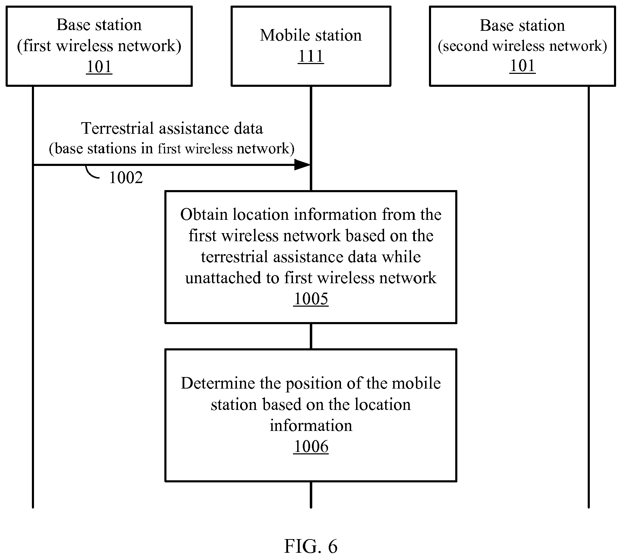

FIG. 6 illustrates a flow between a mobile station 111 and a first wireless network 121, in accordance with some embodiments of the present invention. The flow shows a method of determining an estimated position of a mobile station 111. At 1002, a base station 101 in the first wireless network 121 transmits terrestrial assistance data. The terrestrial assistance data may be part of an assistance data message containing both terrestrial and satellite assistance data. The terrestrial assistance data includes assistance data information about the base stations 101 in the first wireless network 121. The mobile station 111 receives this terrestrial assistance data from the first wireless network 121.

In prior art systems, a mobile station 111 does not receive terrestrial assistance data from a wireless network if the mobile station 111 is not attached to that wireless network. In embodiments of the present invention, the mobile station 111 receives terrestrial assistance data from the first wireless network 121 and uses the assistance data at a later time when not attached to the first wireless network 121. Here at 1005, the mobile station 111 next obtains, while unattached to the first wireless network 121, location information from the first wireless network 121.

The location information is based on and related to the terrestrial assistance data from the first wireless network 121. The communication receiver 332 and the communication transceiver 305 each acts as a means for obtaining location information from the first wireless network 121 based on the terrestrial assistance data for first wireless network 121. This location information may be timing measurements for signals communicated between the base stations 101 of the first wireless network 121 and the mobile station 111. The communication receiver 332 and the communication transceiver 305 each acts as a means for determining timing measurements based on the terrestrial assistance data from the first wireless network 121. The assistance data may provide information to help the mobile station 111 to receive and measure these signals as well as information on the timing of these signals (e.g., transmission time differences between the base stations 101) and information about the source base stations 101 (e.g., the location coordinates of the base stations 101). Next, at 1006, the mobile station 111 determines the estimated position of the mobile station 111 based on this location information.

In some embodiments, a mobile station 111 includes a communication receiver 332, a mobile station processor 333 and memory. The mobile station processor 333 acts as a means for determining the estimated position of the mobile station based on the location information. In addition, the communication receiver 332 may be part of a communication transceiver 305 and receives assistance data from a first wireless network 121. The assistance data includes terrestrial assistance data for the first wireless network 121. The terrestrial assistance data includes assistance data for one or more base stations 101 in the first wireless network 121. The mobile station processor 333 and memory include instructions to obtain, while unattached to the first wireless network 121, location information from the first wireless network 121 based on the terrestrial assistance data for the first wireless network 121. The mobile station processor 333 and memory also include instructions to determine the position of the mobile station 111 based on the location information.

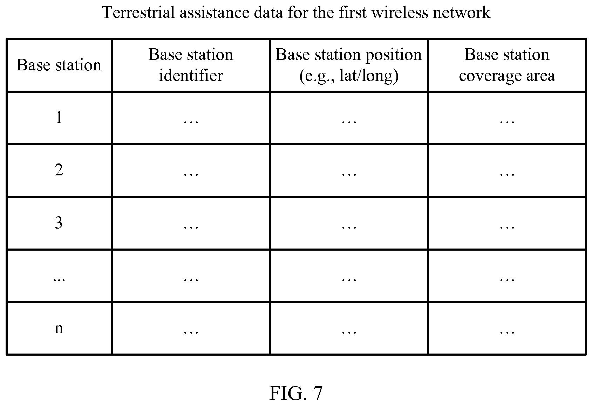

FIG. 7 shows an example of terrestrial assistance data, in accordance with some embodiments of the present invention. The terrestrial assistance data contains information from the base station almanac regarding the one or more base stations 101 in at least the first wireless network 121. For example, the terrestrial assistance data may contain a location of just the one base station 101 transmitting the assistance data. Alternatively, the terrestrial assistance data may contain information for several base stations 101 within the first wireless network 121. For example, for each base station 101, the terrestrial assistance data may contain a base station identifier (e.g., MAC address, cell tower identifier or global base station identifier including both network and base station addresses) and the location (e.g., latitude and longitude) of the base station 101. Additionally, the terrestrial assistance data may contain one or more of the following fields: elevation, coverage area, wireless network identifier, absolute transmission timing of the base station 101 relative to GPS or UTC time, relative transmission timing differences between base stations 101, neighbors and/or other characterization or capabilities of the base station 101.

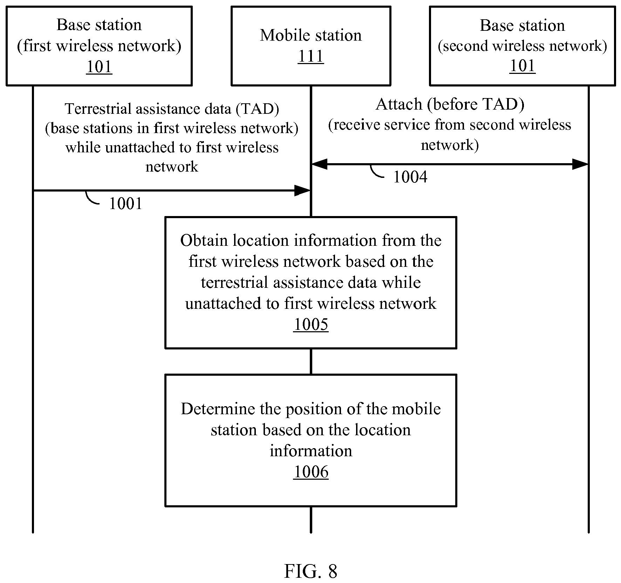

FIGS. 8-10 illustrate flows between a mobile station 111 and first and second wireless networks 121, 122, in accordance with some embodiments of the present invention. The mobile station 111 interacts with a first base station 101 in a first wireless network 121 and a second base station 101 in a second wireless network 122.

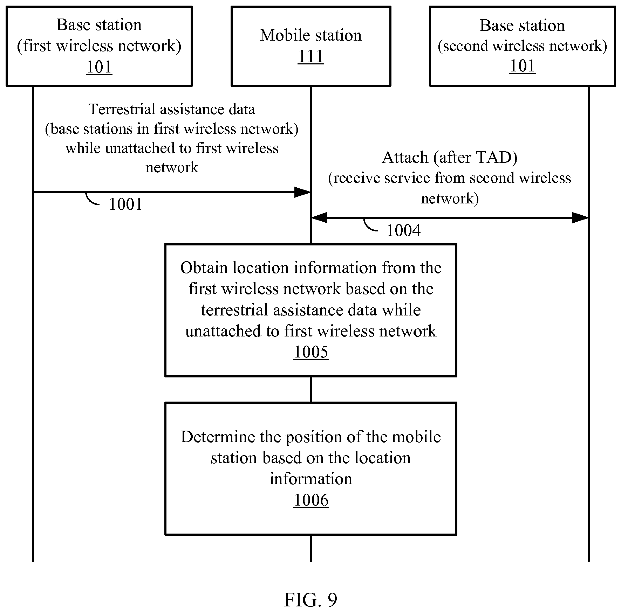

FIGS. 8 and 9 show relative timing of the mobile station 111 interacting with the first and second wireless networks 121, 122. In FIG. 8, the mobile station 111 interacts with the first wireless network 121 after interacting with the second wireless network 122. At 1004, the mobile station 111 first attaches to the second wireless network 122 to receive service from the second wireless network 122. For example, the mobile station 111 attaches to the second wireless network 122 and makes a voice call through the PSTN 117 to a landline telephone. After attaching to the second wireless network 122, at 1002, the mobile station 111 receives terrestrial assistance data from the first wireless network 121. In this embodiment, the mobile station 111 may or may not attach to the first wireless network 121. If the mobile station 111 receives terrestrial assistance data from a location server 115 in the first wireless network 121, then the mobile station 111 may attach to the first wireless network 121, receive the assistance data and then detach. In this case, implementation in a mobile station processor 333 of a protocol to attach to (and detach from) the first wireless network 121 acts as a means for attaching to and a means for detaching from the first wireless network 121. If the mobile station 111 receives assistance data from the first wireless network 121 that is broadcast by a base station 101 in the first wireless network 121, then the mobile station 111 does not need to necessarily attach to the first wireless network 121 in order to receive the assistance data. At 1005, as described above and while unattached to the first wireless network 121, the mobile station 111 obtains location information from the first wireless network 121, and at 1006, determines the estimated position of the mobile station 111 based on this location information.

In FIG. 9, the mobile station 111 interacts with the first wireless network 121 before interacting with the second wireless network 122. At 1001, the mobile station 111 first receives terrestrial assistance data from the first wireless network 121. Again, the mobile station 111 does not need to necessarily attach therefore may or may not attach to the first wireless network 121. If the mobile station 111 receives terrestrial assistance data from a location server 115 in the first wireless network 121, then the mobile station 111 may attach to the first wireless network 121, receive the assistance data and then detach. Again, if the mobile station 111 receives assistance data in a broadcast from a base station 101 in the first wireless network 121, then the mobile station 111 may or may not attach to the first wireless network 121 in order to receive the assistance data. Next, at 1004, the mobile station 111 attaches to the second wireless network 122 to receive service from the second wireless network 122. As described above at 1005, while unattached to the first wireless network 121, the mobile station 111 obtains location information, and at 1006, determines the estimated position of the mobile station 111 based on this location information.

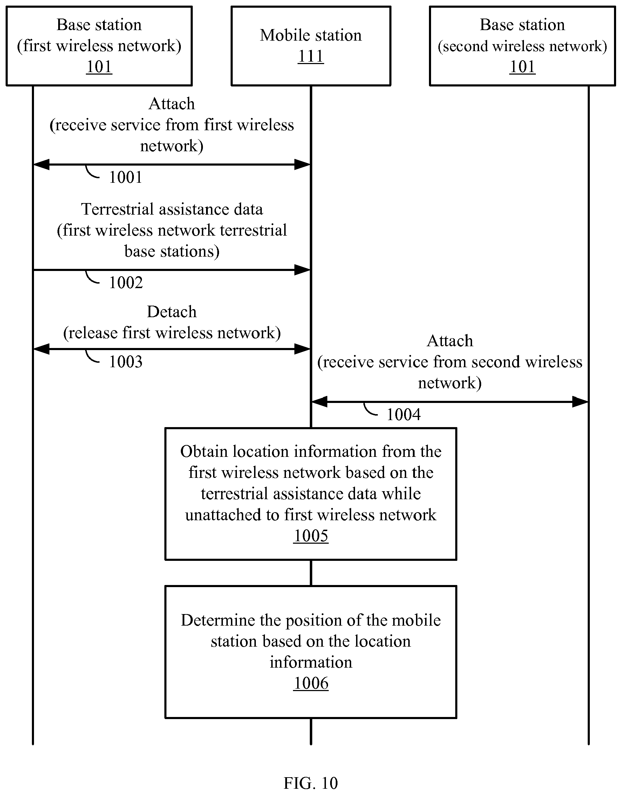

In FIG. 10, the mobile station 111 attaches to both the first wireless network 121 and the second wireless network 122. At 1001, the mobile station 111 attaches to the first wireless network 121 to receive service from first wireless network 121. At 1002, the mobile station 111 receives terrestrial assistance data from the first wireless network 121. At 1003, the mobile station 111 detaches from the first wireless network 121. At 1004, the mobile station 111 attaches to the second wireless network 122 to receive service from the second wireless network 122. The mobile station 111 may attach to the second wireless network 122 before or after attaching to the first wireless network 121 (i.e., before or after 1001), before or after receiving terrestrial assistance data from the first wireless network 121 (i.e., before or after 1002) or before or after detaching from the first wireless network 121 (i.e., before or after 1003). As described above at 1005, while unattached to the first wireless network 121, the mobile station 111 obtains location information, and at 1006, determines the estimated position of the mobile station 111 based on this location information.

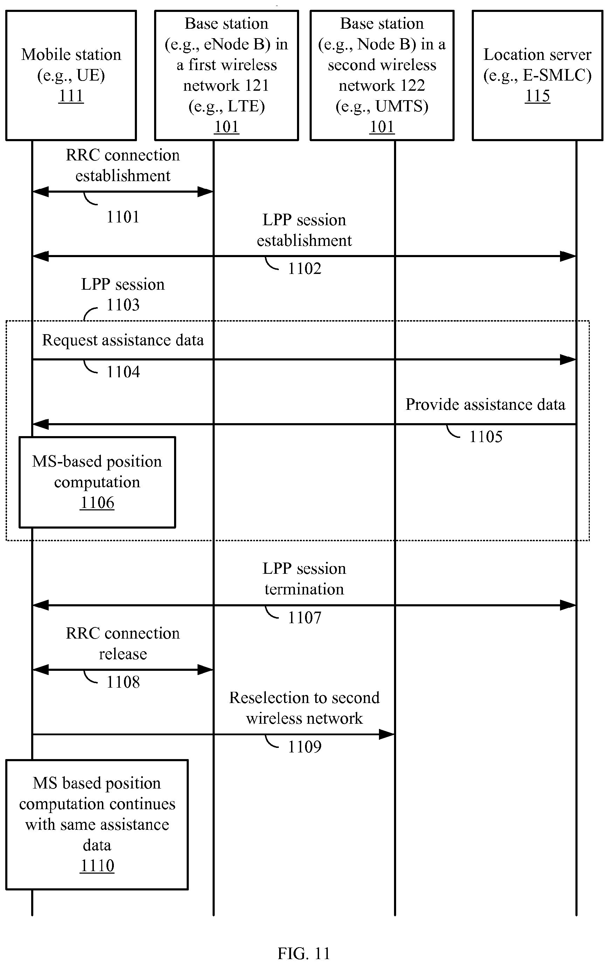

FIG. 11 shows a method that continues to use assistance data after an inter-RAT reselection, in accordance with some embodiments of the present invention. While this figure discloses a first wireless network 121 being an LTE network and the second wireless network 122 being an UMTS network, the concept applies to any type of first wireless network 121 and any type of second wireless network 122. The following description may be applied to networks that use the same RAT and also networks that use different RATs. For example, first wireless network 121 may be an LTE network, while the second wireless network 122 may follow any standard.

The discussion below assigns standard or protocol-specific terms to various network elements as an example. The mobile station 111 is a User Equipment (UE), the first wireless network 121 is an LTE network, the base station 101 of the first wireless network 121 is an eNode B, the second wireless network 122 is a UMTS network, the base station 101 of the second wireless network 122 is a Node B, and the location server 115 is an Evolved Serving Mobile Location Center (E-SMLC) location server. Of course, other combinations of network architectures and protocols are possible.

As shown, a mobile station 111 first communicates with a base station 101 in a first wireless network 121 to obtain assistance data. Next, the mobile station 111 is detached from the first wireless network 121 and in communication with a base station 101 in a second wireless network 122 but the mobile station 111 continues to use the assistance data obtained from the first wireless network 121 while attached to the second wireless network 122.

At 1101, the mobile station 111 and a base station 101 in the first wireless network 121 perform a Radio Resource Control (RRC) connection establishment procedure to attach the mobile station 111 to the first wireless network 121. The connection establishment uses RRC for all air interface signalling as defined in 3GPP TS 36.331 and other protocols (e.g., the Non-Access-Stratum protocol defined in 3GPP TS 24.301) at levels above RRC.

At 1102, the mobile station 111 and the location server 115 perform an LTE Positioning Protocol (LPP) session establishment procedure to start an LPP session. This procedure may be initiated by a Mobile Originated Location Request (MO-LR) (not shown) from the mobile station 111 to the first wireless network 121.

At 1103, the established LPP session shown is used to exchange LPP signalling messages 1104 and 1105.

At 1104, the mobile station 111 sends the location server 115 an LPP message to request assistance data. For example, the requested assistance data may be for an OTDOA positioning method supported by LPP for LTE networks.

At 1105, the location server 115 responds to the mobile station 111 by providing the requested assistance data. In some embodiments, the request for assistance data at 1104 may not be present and assistance data provided at 1105 may be associated with other activity (e.g., a request from the location server 115 to mobile station 111 for location information).

At 1106, the mobile station 111 obtains timing or position measurements (e.g., OTDOA measurements) and then performs an MS-based position computation with these position measurements to obtain its estimated position. In some cases, the MS-based position computation follows an OTDOA terrestrial position method supported by LPP.

The LPP protocol and procedures, the OTDOA terrestrial positioning method and its associated assistance data are each defined in 3GPP TS 36.355, which is a publically available document from 3GPP. The MO-LR terrestrial positioning procedure is defined in 3GPP 23.271, TS 24.171 and TS 24.080, which are also publically available from 3GPP.

At 1107, the mobile station 111 and the location server 115 terminate the LPP session.

At 1108, the mobile station 111 performs an RRC connection release procedure with the base station 101 in the first wireless network 121 thereby detaching from the first wireless network 121. The mobile station 111 may detach from the first wireless network 121 as a result of losing signal contact with the base station 101 in the first wireless network 121. Alternatively, the mobile station 111 may decide to attach to a more preferred wireless network.

At 1109, the mobile station 111 performs an inter-RAT reselection by reselecting the second wireless network 122 via an attachment procedure with the base station 101 in the second wireless network 122.

At 1110, while disconnected from the first wireless network 121 and attaching or attached to the second wireless network 122, the mobile station 111 continues the MS-based positioning computation. That is, the mobile station 111 continues to use the same assistance data received at 1105 from the first wireless network 121 and previously used at 1106. The continued positioning computations involve measurements from base stations 101 in the first wireless network 121 (e.g., OTDOA measurements on positioning reference signals transmitted by eNode Bs). In other embodiments, the continued positioning computations do not involve measurements from base stations 101 in the first wireless network 121.

If the continued positioning computations involve measurements from base stations 101 in the first wireless network 121, the mobile station 111 may tune away from the second wireless network 122 to make these measurements in the first wireless network 121 even though it is not attached to the first wireless network 121. For example, the mobile station 111 may wait for an idle period to tune away from the second wireless network 122 and tune to the first wireless network 121 to make the measurements. Idle periods may be provided by a DRX pattern, by a compressed mode, by a pattern of measurement gaps, by MS-requested gaps, or any other method that the second wireless network 122 provides for the mobile station 111 to perform measurements that may require interruption of radio reception.

Alternatively, the mobile station 111 may have the capability to receive and process two separate RF signals at the same time, thereby allowing it to keep tuned to the second wireless network 122 and also tune to the first wireless network 121 for the measurements.

Monitoring by the mobile station 111 may be necessary to determine when the assistance data have become invalid (or less valid). For example, the assistance data may become invalid after some period of time has elapsed. The assistance data may become invalid after the mobile station 111 moves by more than a certain distance from a location where it originally received the assistance data. The assistance data may include information on the period of validity of the assistance data. For example, the assistance data may include a reference time frame that the assistance data are valid and/or may reference a geographical area, a coverage area, a footprint or a distance from a reference location (such as the location of the base station 101) that the assistance data are valid. To monitor its distance from this reference location, the mobile station 111 may use a variety of techniques, such as periodically measuring signal strengths and/or reading system information from base stations 101 in the first wireless network 121. This monitoring may allow the mobile station 111 to determine, for instance, when it has left the area where the assistance data are valid. As a result, the mobile station 111 may stop computing further positions using the assistance data and/or trigger a procedure to update the assistance data and/or alert the user that future positions will be degraded.

For example, if the maximum antenna range (MAR) for a serving base station 101 in the first wireless network 121 is provided as part of the assistance data from the first wireless network 121, the mobile station 111 can estimate its distance from the base station 101 in the first wireless network 121 using the MAR and measured signal strength. Alternatively, the mobile station 111 may compare measured signals from the base station 101 in the first wireless network 121 to other base stations 101 on the same frequency to estimate when it would most probably have moved to a different serving cell if it had remained on the original RAT.

In the case of OTDOA assistance data for LTE, the geographical range of validity may be defined by a list of cell IDs of base stations 101 in the first wireless network 121. The cell IDS may identify the serving base station 101 and its neighbours or other base stations 101 from which the first wireless network 121 expects the mobile station 111 to be able to receive a signal.

The mobile station 111 may attempt to determine when it has left this area based on not observing a signal from any of the listed cells for some period or based on measuring signal strengths from the first wireless network 121 and making an assumption about the probable serving cell based on those measurements, invalidating the assistance data if the expected serving cell was outside the set of cells for which it would consider the assistance data valid. Other similar heuristics for determining "possible invalidation" of the assistance data could be considered as well.

Assistance data that becomes invalid after a period of time has elapsed can be refreshed by a mobile station 111 from a network if this period of time is known, which typically applies to GNSS related assistance data (e.g., ephemeris data, acquisition assistance data). For OTDOA assistance data involving timing relationships between eNode Bs, the period cannot always be predicted as it may involve timing drift of eNode Bs and, in rare cases, sudden discontinuous changes to transmission timing (e.g., caused by realignment to a GNSS signal). For these cases, some explicit signal may need to be provided (e.g., via broadcast) to alert mobile stations 111 that timing has changed.

One method to alert mobile stations 111 to any significant change in the timing relationship between eNode Bs would be for each eNode B to broadcast a sequence number, possibly as small as 1 bit, that would be incremented by an eNode B whenever its timing relationship with any neighbor had changed by more than a certain amount since the last time such a change was advertised. A mobile station 111 observing a change in such a sequence number (e.g., from a serving eNode B or a nearby non-serving eNode B) would be obliged to request new timing assistance the next time it needed an estimated position for the mobile station 111 based OTDOA. As an alternative, a network could bring certain mobile stations 111 into connected mode to force an update of assistance data.

As described, a mobile station 111 detaches from a first wireless network 121 but continues to use assistance data obtained earlier from that first wireless network 121 in order to determine its estimated position. In some embodiments, the mobile station 111 temporarily reattach to the earlier first wireless network 121 in order to obtain new assistance data when the previously obtained assistance data becomes invalid (or less valid). Once new assistance data has been obtained, the mobile station 111, if attached, may again detach from the first wireless network 121.

Although a mobile station 111 may obtain its estimated position autonomously using MS-based positioning once it has obtained the necessary assistance data, an operator may still like to bill the mobile station 111 for providing the assistance data and thus continue to obtain revenue from the capability (but without the need to provide the same level of E-SMLC position computation as for MS-assisted positioning). Operators with synchronized eNode Bs, who may not need to provide OTDOA related timing data to mobile stations 111, could experience a revenue loss once mobile stations 111 had been provided with eNode B coordinates, since a mobile station 111 could remember these (at least for any region where the mobile station 111 was commonly located) and not need to request the coordinates a second time. This might not matter if the operator was still providing other assistance data (e.g., GNSS ephemeris). But if it was important, an operator could introduce a small random time difference between eNode Bs (e.g., of a few microseconds) that would be too small to impact timing assistance for A-GNSS but large enough to require continued assistance for OTDOA. Such a random timing difference might be changed every few hours (or days) to ensure that mobile stations 111 would remain dependent on operator assistance data for OTDOA.

In some other embodiments of the invention, the assistance data provided from a base station 101 in a first wireless network 121 enables a mobile station 111 to compute its estimated position using measurements of signals received from base stations 101 in the first wireless network 121 while the mobile station 111 is not attached to the first wireless network 121. In an alternative embodiment, the assistance data provided by the first wireless network 121 may still be terrestrial in nature but may only assist the mobile station 111 to obtain its estimated position using measurements of base stations 101 in a second wireless network 122 and/or measurements of other sources such as GNSS satellites. As an example, a base station 101 in a first wireless network 121 may transfer to the mobile station 111 assistance data comprising the timing relationship between one or more base stations 101 in the first wireless network 121 and some absolute time like GPS, GNSS or UTC time. In this case, the mobile station 111 may use the assistance data at a later time when not attached to the first wireless network 121 to obtain absolute time (e.g., GPS, GNSS or UTC time) by measuring the timing of signals from one or more base stations 101 in the first wireless network 121 and using the assistance data to convert this time into absolute time. The obtained absolute time may then be used to perform positioning of the mobile station 111 to determine an estimated position in association with a second wireless network 122 (e.g., may be used to assist measurement of GPS or GNSS signals and improve the accuracy and reduce the delay in obtaining these signals).

The methodologies described herein may be implemented by various means depending upon the application. For example, these methodologies may be implemented in hardware, firmware, software, or any combination thereof. For a hardware implementation, the processors/processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For an implementation involving firmware and/or software, the methodologies may be implemented with modules (e.g., procedures, functions, and so on) that perform the functions described herein. Any machine-readable medium tangibly embodying instructions may be used in implementing the methodologies described herein. For example, software codes may be stored in a memory and executed by a processor unit. Memory may be implemented within the processor unit or external to the processor unit. As used herein the term "memory" refers to any type of long term, short term, volatile, nonvolatile, or other memory and is not to be limited to any particular type of memory or number of memories, or type of media upon which memory is stored.

For an implementation involving firmware and/or software, the functions may be stored as one or more instructions or code on a computer-readable medium. Examples include computer-readable media encoded with a data structure and computer-readable media encoded with a computer program. Computer-readable medium may take the form of an article of manufacture. Computer-readable medium includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

The previous description of the disclosed aspects is provided to enable any person skilled in the art to make or use the present disclosure.

## Claims

1. A method of determining an estimated position of a mobile station (111), the method comprising:
receiving (1002), while attached to a first cellular wireless network (121), terrestrial assistance data broadcast from a base station in the first cellular wireless network, wherein the terrestrial assistance data comprises almanac data for a plurality of base stations in the first cellular wireless network and a period of validity of the assistance data;
detaching (1003) from the first cellular wireless network and attaching to a second cellular wireless network that is different from the first cellular wireless network, the mobile station being detached from the first cellular wireless network when attached to the second cellular wireless network;
obtaining (1005), while attached to the second cellular wireless network
timing measurements from signals of the first cellular wireless network based at least in part on the received terrestrial assistance data;
determining (1006) the estimated position of the mobile station based on the timing measurements
monitoring when the terrestrial assistance data has become invalid; and
temporarily reattaching to the first cellular wireless network in order to obtain new terrestrial assistance data.

2. The method of claim 1, wherein the first cellular wireless network (121) comprises a Long Term Evolution (LTE) network and the terrestrial assistance data comprises assistance data for Observed Time Difference of Arrival (OTDOA) positioning method.

3. The method of claim 1, wherein the terrestrial assistance data further comprises a timing relationship between at least one base station in the first cellular wireless network and an absolute time.

4. A mobile station (111) for determining an estimated position of the mobile station, the mobile station comprising:
means for receiving (311, 305), while attached to a first cellular wireless network (121), terrestrial assistance data broadcast from a base station in the first cellular wireless network, wherein the terrestrial assistance data comprises almanac data for a plurality of base stations in the first cellular wireless network and a period of validity of the assistance data;
means for detaching from the first cellular wireless network (121) and for attaching to a second cellular wireless network that is different from the first cellular wireless network, the mobile station being detached from the first cellular wireless network when attached to the second cellular wireless network;
means for obtaining, while attached to the second cellular wireless network, timing measurements from signals of the first cellular wireless network based at least in part on the received terrestrial assistance data;
means for determining the estimated position of the mobile station based on the timing measurements
means for monitoring when the terrestrial assistance data has become invalid; and
means for temporarily reattaching to the first cellular wireless network in order to obtain new terrestrial assistance data.

5. A computer-readable storage medium including program code stored thereon for use by a mobile station, comprising:
program code to carry out the steps of any of claims 1 to 3.

## Patentansprüche

1. Ein Verfahren zum Bestimmen einer geschätzten Position einer Mobilstation (111), wobei das Verfahren Folgendes aufweist:
Empfangen (1002), während einer Anbindung an ein erstes zellulares Drahtlosnetzwerk (121), von terrestrischen Unterstützungsdaten, die von einer Basisstation in dem ersten zellularen Drahtlosnetzwerk gebroadcasted bzw. ausgestrahlt werden, wobei die terrestrischen Unterstützungsdaten Almanachdaten für eine Vielzahl von Basisstationen in dem ersten zellularen Drahtlosnetzwerk und eine Periode einer Gültigkeit der Unterstützungsdaten aufweisen;
Lösen (1003) von dem ersten zellularen Drahtlosnetzwerk und Anbinden an ein zweites zellulares Drahtlosnetzwerk, das sich von dem ersten zellularen Drahtlosnetzwerk unterscheidet, wobei die Mobilstation von dem ersten zellularen Drahtlosnetzwerk gelöst wird, wenn sie an das zweite zellulare Drahtlosnetzwerk angebunden ist;
Erlangen (1005), während der Anbindung an das zweite zellulare Drahtlosnetzwerk, von Timing-Messungen von Signalen von dem ersten zellularen Drahtlosnetzwerk basierend wenigstens teilweise auf den empfangenen terrestrischen Unterstützungsdaten;
Bestimmen (1006) der geschätzten Position der Mobilstation basierend auf den Timing-Messungen
Überwachen, wann die terrestrischen Unterstützungsdaten ungültig geworden sind; und
temporäres erneutes Anbinden an das erste zellulare Drahtlosnetzwerk, um neue terrestrische Unterstützungsdaten zu erlangen.

2. Verfahren nach Anspruch 1, wobei das erste zellulare Netzwerk (121) ein LTE-Netzwerk (LTE = Long Term Evolution) aufweist und die terrestrischen Unterstützungsdaten Unterstützungsdaten für ein OTDOA-Positionsbestimmungsverfahren (OTDOA = Observed Time Difference of Arrival bzw. beobachtete Differenz der Ankunftszeit) aufweisen.

3. Verfahren nach Anspruch 1, wobei die terrestrischen Unterstützungsdaten weiter eine Timing-Beziehung zwischen wenigstens einer Basisstation in dem ersten zellularen Drahtlosnetzwerk und einer absoluten Zeit aufweisen.

4. Eine Mobilstation (111) zum Bestimmen einer geschätzten Position der Mobilstation, wobei die Mobilstation Folgendes aufweist:
Mittel zum Empfangen (311, 305), während einer Anbindung an ein erstes zellulares Drahtlosnetzwerk (121), von terrestrischen Unterstützungsdaten, die von einer Basisstation in dem ersten zellularen Drahtlosnetzwerk gebroadcasted bzw. ausgestrahlt werden, wobei die terrestrischen Unterstützungsdaten Almanachdaten für eine Vielzahl von Basisstationen in dem ersten zellularen Drahtlosnetzwerk und eine Periode einer Gültigkeit der Unterstützungsdaten aufweisen;
Mittel zum Lösen von dem ersten zellularen Drahtlosnetzwerk (121) und zum Anbinden an ein zweites zellulares Drahtlosnetzwerk, das sich von dem ersten zellularen Drahtlosnetzwerk unterscheidet, wobei die Mobilstation von dem ersten zellularen Drahtlosnetzwerk gelöst wird, wenn sie an das zweite zellulare Drahtlosnetzwerk angebunden ist;
Mittel zum Erlangen, während der Anbindung an das zweite zellulare Drahtlosnetzwerk, von Timing-Messungen von Signalen von dem ersten zellularen Drahtlosnetzwerk basierend wenigstens teilweise auf den empfangenen terrestrischen Unterstützungsdaten;
Mittel zum Bestimmen der geschätzten Position der Mobilstation basierend auf den Timing-Messungen
Mittel zum Überwachen, wann die terrestrischen Unterstützungsdaten ungültig geworden sind; und
Mittel zum temporären erneuten Anbinden an das erste zellulare Drahtlosnetzwerk, um neue terrestrische Unterstützungsdaten zu erlangen.

5. Ein computerlesbares Speichermedium, das darauf gespeicherten Programmcode zur Verwendung durch eine Mobilstation aufweist, das Folgendes aufweist:
Programmcode zum Durchführen der Schritte nach einem der Ansprüche 1 bis 3.

## Revendications

1. Procédé de détermination d'une position estimée d'un poste mobile (111), le procédé comprenant :
recevoir (1002), pendant un attachement à un premier réseau sans fil cellulaire (121), des données d'assistance terrestres diffusées à partir d'une station de base se trouvant dans le premier réseau sans fil cellulaire, les données d'assistance terrestres comprenant des données d'éphémérides pour une pluralité de stations de base dans le premier réseau sans fil cellulaire et une période de validité des données d'assistance ;
se détacher (1003) du premier réseau sans fil cellulaire et s'attacher à un deuxième réseau sans fil cellulaire qui est différent du premier réseau sans fil cellulaire, le poste mobile étant détaché du premier réseau sans fil cellulaire lorsqu'il est attaché au deuxième réseau sans fil cellulaire ;
obtenir (1005), pendant un attachement au deuxième réseau sans fil cellulaire, des mesures temporelles à partir de signaux du premier réseau sans fil cellulaire sur la base au moins en partie des données d'assistance terrestres reçues ;
déterminer (1006) la position estimée du poste mobile sur la base des mesures temporelles ;
surveiller le moment où les données d'assistance terrestres sont devenues non valides ; et
se ré-attacher temporairement au premier réseau cellulaire afin d'obtenir de nouvelles données d'assistance terrestres.

2. Procédé selon la revendication 1, dans lequel le premier réseau sans fil cellulaire (121) comprend un réseau d'Évolution à Long Terme (LTE) et les données d'assistance terrestres comprennent des données d'assistance terrestres pour un procédé de détermination de position par Différence de Temps d'Arrivée Observée (OTDOA).

3. Procédé selon la revendication 1, dans lequel les données d'assistance terrestres comprennent en outre une relation temporelle entre au moins une station de base se trouvant dans le premier réseau sans fil cellulaire et un temps absolu.

4. Poste mobile (111) pour déterminer une position estimée du poste mobile, le poste mobile comprenant :
des moyens pour recevoir (311, 305), pendant un attachement à un premier réseau sans fil cellulaire (121), des données d'assistance terrestres diffusées à partir d'une station de base se trouvant dans le premier réseau sans fil cellulaire, les données d'assistance terrestres comprenant des données d'éphémérides pour une pluralité de stations de base dans le premier réseau sans fil cellulaire et une période de validité des données d'assistance ;
des moyens pour se détacher du premier réseau sans fil cellulaire (121) et s'attacher à un deuxième réseau sans fil cellulaire qui est différent du premier réseau sans fil cellulaire, le poste mobile étant détaché du premier réseau sans fil cellulaire lorsqu'il est attaché au deuxième réseau sans fil cellulaire ;
des moyens pour obtenir, pendant un attachement au deuxième réseau sans fil cellulaire, des mesures temporelles à partir de signaux du premier réseau sans fil cellulaire sur la base au moins en partie des données d'assistance terrestres reçues ;
des moyens pour déterminer la position estimée du poste mobile sur la base des mesures temporelles ;
des moyens pour surveiller le moment où les données d'assistance terrestres sont devenues non valides ; et
des moyens pour se ré-attacher temporairement au premier réseau cellulaire afin d'obtenir de nouvelles données d'assistance terrestres.

5. Support de stockage lisible par un ordinateur comprenant du code de programme mémorisé sur lui pour utilisation par un poste mobile, comprenant :
du code de programme pour exécuter les étapes de l'une quelconque des revendications 1 à 3.
